# EUROPEAN PATENT APPLICATION

(11) **EP 4 246 030 A1**
(43) Date of publication of application: **20.09.2023**
(21) Application number: 21909273.1
(22) Date of filing: 16.12.2021
(51) Int. Cl.: F16M 11/04, F16M 11/10, F16M 11/18, G06F 1/16

(54) **DISPLAY AND COMPUTER**

(30) Priority: 24.12.2020 CN 202011554206; 04.06.2021 CN 202110626945
(71) Applicant: Huawei Technologies Co., Ltd., Shenzhen, Guangdong 518129 (CN)
(72) Inventor: HU, Xiaogang, Shenzhen, Guangdong 518129 (CN); ZHU, Guangyao, Shenzhen, Guangdong 518129 (CN); RAN, Jianbo, Shenzhen, Guangdong 518129 (CN); TU, Yiming, Shenzhen, Guangdong 518129 (CN); ZHANG, Han, Shenzhen, Guangdong 518129 (CN)
(74) Representative: Gill Jennings & Every LLP
(86) International application number: PCT/CN2021/138941
(87) International publication number: WO 2022/135277

(57) **Abstract**

This application provides a display and a computer. The display includes: a main board, a display body, and a support configured to support the display body. The display body includes a housing and a display module mounted on the housing, the support is disposed on a side that is of the housing and that is away from the display module, the main board is mounted in the support, and a cable of the display module extends out of the housing and into the support to be connected to the main board. This application provides a display and a computer to implement an ultra-thin design of a display body.

## Description

This application claims priority to Chinese Patent Application No. 202011554206.0, filed with the China National Intellectual Property Administration on December 24, 2020 and entitled "DISPLAY AND COMPUTER", and priority to Chinese Patent Application No. 202110626945.4, filed with the China National Intellectual Property Administration on June 04, 2021 and entitled "DISPLAY AND COMPUTER", which are incorporated herein by reference in their entireties.

### TECHNICAL FIELD

This application relates to the field of computer technologies, and in particular, to a display and a computer.

### BACKGROUND

With the rapid development of science and technology, a display has become a necessary tool for people's daily office and entertainment. With improvement of people's requirements for an appearance of the display, the display gradually develops in a direction of ultra-thin.

In a related technology, the display includes a display body and a support. The support is only used as a mechanical part to support the display body and adjust a support height and a pitch angle of the display body. The display body includes a display module, and components such as a main board and an interface that are disposed/provided at a back of the display module.

In this case, a thickness size of the display body is restricted by components such as the main board and the interface, and therefore, the thickness size is large, resulting in a poor overall appearance effect of the display.

### SUMMARY

This application provides a display and a computer to implement an ultra-thin design of a display body.

An aspect of embodiments of this application provides a display, including: a main board, a display body, and a support configured to support the display body. The display body includes a housing and a display module mounted on the housing, the support is disposed on a side that is of the housing and that is away from the display module, the main board is mounted in the support, and a cable of the display module extends out of the housing and into the support to be connected to the main board.

Embodiments of this application provides a display in which the main board is disposed in the support, and this facilitates lightness and thinness of the display body, facilitates proper utilization of space inside the support, helps increase an area of the main board and enhance performance of the main board and improve heat dissipation efficiency of the main board, compared with a solution in which a main board is disposed in a display body in a related technology

In a possible implementation, the display further includes a rise-and-fall assembly and a cable management assembly, the rise-and-fall assembly is located above the main board, the rise-and-fall assembly includes a slide block and a slide rail, the slide block is fixedly connected to the display body, and the slide rail is fixedly connected to the support. One end that is of the cable and that extends into the support is fixedly connected to the slide block, the other end of the cable passes through the cable management assembly and is fastened to the main board, the slide block and the cable management assembly are slidingly connected to the slide rail separately, and a sliding speed of the cable management assembly relative to the slide rail is less than a sliding speed of the slide block relative to the slide rail.

The rise-and-fall assembly is configured to implement a sliding lifting function of the display body, the cable management assembly is configured to ensure that a cable can rise and fall along with the display body in a lifting process of the display body, and the sliding speed of the cable management assembly relative to the slide rail is set to be less than the sliding speed of the slide block relative to the slide rail, to implement cable management with differential speed for movement of the cable management assembly and the display body.

In a possible implementation, the slide rail includes an outer slide rail, an inner slide rail, and a steel ball. The slide block is disposed in the inner slide rail, the inner slide rail is disposed in the outer slide rail, the cable management assembly is fastened to the inner slide rail, and the steel ball is embedded on the inner slide rail and is simultaneously rollingly connected to the slide block and the outer slide rail, so that a sliding speed of the inner slide rail relative to the outer slide rail is half of a sliding speed of the slide block relative to the slide rail.

Under a rolling action of the steel ball, the slide block and the inner slide rail relatively move, the inner slide rail and the outer slide rail relatively move. After two relative movement conversions, a speed of the slide block relative to the outer slide rail is twice that of the inner slide rail relative to the outer slide rail, to skillfully implement the cable management with differential speed for the movement of the cable management assembly and the display body.

In a possible implementation, the rise-and-fall assembly further includes a first fixing plate and a cable fixing base. The first fixing plate is disposed between the display body and the cable management assembly, and the first fixing plate is fixedly connected to the slide block and is fixedly connected to the display body. The cable fixing base is disposed on a side that is of the first fixing plate and that faces the cable management assembly, and the cable is clamped and fastened on the cable fixing base.

Disposing the first fixing plate can facilitate fastening connection between the slide block and the display body, and disposing the cable fixing base can reliably fix the cable, to prevent the cable from being pulled and damaged in a lifting process of the cable.

In a possible implementation, the rise-and-fall assembly further includes a constant force spring, the constant force spring is fastened to the support through a constant force spring seat, and an end part of the constant force spring is fastened to the slide block.

The constant force spring is used to provide constant elastic force to ensure uniform force on the slide block in a sliding process thereof, thereby improving lifting stability of the display body.

In a possible implementation, the cable management assembly includes a cable management base and a cable management roller. The cable management base is fixedly connected to the inner slide rail, the cable management roller is fastened to the cable management base, an axial direction of the cable management roller is perpendicular to an extension direction of the slide rail, and the cable is wound around a peripheral side of the cable management roller.

A rolling function of the cable management roller can help the cable move, and reduce pulling and friction of the cable, so that the cable moves more smoothly relative to the cable management base.

In a possible implementation, a plurality of cable management rollers are included, and the plurality of cable management rollers are arranged in an arc shape or a semicircular shape on a surface of the cable management base.

The plurality of cable management rollers are arranged in an arc shape or a semicircular shape, to restrict cabling of a first cable, and ensure that a moving part of the cable meets a minimum radius requirement of the first cable.

In a possible implementation, the cable management assembly further includes a second fixing plate. The second fixing plate is fixedly connected to the inner slide rail, and the cable management base is fixedly fastened to the second fixing plate; and the cable management roller is disposed on a side that is of the cable management base and that faces the second fixing plate.

Disposing the second fixing plate can facilitate fastening connection between the cable management base and the inner slide rail, and can prevent a cable wound on the cable management roller from detaching.

In a possible implementation, the cable management assembly further includes a cable management baffle. The cable management baffle is fastened on the cable management base, the cable management baffle is located on a side that is of the cable management base and that is away from the second fixing plate, and the cable management roller is disposed on a side that is of the cable management base and that faces the cable management baffle.

Both sides of the cable management base can be disposed with the cable management rollers, and the cable management baffle is used to prevent the cable winding between the cable management base and the cable management baffle from detaching.

In a possible implementation, the cable includes a first cable and a second cable, and the first cable and the second cable are respectively wound around the cable management rollers that are located on two sides of the cable management base.

Two cables of the display module can be set as required, and cable management rollers are disposed on both sides of the cable management base, so that the two cables do not interfere with each other, and can be connected to the main board and lift in an orderly manner.

In a possible implementation, the display further includes a rotating shaft assembly, the display body is connected to the slide block by using the rotating shaft assembly, an axis of the rotating shaft assembly is parallel to a plane in which the display body is located and is perpendicular to the extension direction of the slide rail, the display body can rotate relative to the slide block, and the cable passes through the rotating shaft assembly and extends into the support.

The rotating shaft assembly is connected to the support, and can slide up and down relative to the support, to adjust the support height of the display body, so that the display body has a height suitable for viewing by the user.

In a possible implementation, the rotating shaft assembly includes a rotating shaft body, the rotating shaft body includes a swing arm, a rotating shaft, and a fixing element. The swing arm is fixedly connected to the display body, the fixing element is fixedly connected to the slide block, and the swing arm is rotatably connected to the fixing element by using the rotating shaft.

The rotating shaft body is fixedly connected with the display body and the slide block, and rotation between the display body and the slide block is implemented through rotation between the swing arm and the fixing element, thereby realizing adjustment of a pitch angle of the display body.

In a possible implementation, the rotating shaft assembly further includes a rotating shaft mounting plate and a rotating shaft housing. The rotating shaft housing includes a shielding cover and a shielding casing. A first opening is provided on the housing, the rotating shaft mounting plate is fixedly connected to the backplane of the display module, the shielding cover and the rotating shaft mounting plate are fixedly connected and cover outside the first opening. The shielding casing covers outside the rotating shaft body and is fixedly connected to the shielding cover. The cable of the display module extends from the first opening and passes through the shielding cover and the shielding casing.

The rotating shaft housing is disposed to shield the rotating shaft body and the cable, so that aesthetic appearance of the display can be improved.

In a possible implementation, the support includes a front housing, a rear housing, and a frame body located between the front housing and the rear housing. The slide rail is fastened to the frame body, and a second opening is provided on the front housing, an extension direction of the second opening is consistent with the extension direction of the slide rail, and the cable extends into the support through the second opening.

A structure of the support is easy to install and remove, and can meet a lifting requirement of the cable.

In a possible implementation, a speaker is further disposed in the support. The speaker is connected to the main board, the speaker is located below the main board, and a sound-emitting hole of the speaker faces a front face that is of the support and that faces the display body.

Compared with disposing the speaker in a host, the speaker is disposed in the support, so that a distance between the speaker and the display body is close, and as a result, a sounding effect is better, connection of an earphone and a microphone is more convenient, and diversity of a display function is improved.

In a possible implementation, an IO sub-board is disposed in the support, an IO interface connected to the IO sub-board is provided on the support, the IO interface is located on a back surface that is of the support and that is away from the display body and/or a side surface of the support, and the IO interface is provided close to the bottom of the support.

Providing the IO interface on the support facilitates a light and thin design of the display body, facilitates a diversified design of a function of the support, and can provide visual simplicity and aesthetics of an external cable connected to the interface, compared with a solution in which an interface is provided on a display body in a related technology.

In a possible implementation, the display further includes a base. The base is disposed at the bottom of the support for support, and a near field communication NFC chip and/or a wireless charging coil are/is disposed in the base.

A near field communication NFC antenna, a wireless charging coil, and the like are disposed in the base, so that space of the base can be fully utilized and practical functions such as near field communication and wireless charging can be added to the display.

Another aspect of embodiments of this application further provides a computer, including a host and the foregoing display.

Embodiments of this application provide a display and a computer. A main board is placed in a support, so that a thickness of a display body is no longer restricted by the main board, and ultra-thin setting of the display body can be implemented. A cable of a display module in the display body is connected to the main board in the support, and a cable management assembly and a rise-and-fall assembly are disposed, so that reliable connection of the cable can be implemented, and the cable can be lifted and lowered in an orderly manner in a lifting process of the display body.

### BRIEF DESCRIPTION OF DRAWINGS

FIG. 1 is a schematic diagram of an overall structure of a display according to an embodiment of this application;
FIG. 2 is an exploded schematic diagram of a structure of a display of an electronic device according to an embodiment of this application;
FIG. 3 is a schematic diagram of a structure of a display body according to an embodiment of this application;
FIG. 4 is an exploded schematic diagram of a structure of a rotating shaft assembly and a support according to an embodiment of this application;
FIG. 5 is a schematic diagram of an overall structure of a rotating shaft assembly according to an embodiment of this application;
FIG. 6 is an exploded schematic diagram of a structure of a rotating shaft assembly according to an embodiment of this application;
FIG. 7 is an exploded schematic diagram of a structure of a rotating shaft body according to an embodiment of this application;
FIG. 8 is a schematic diagram of a structure of a frame body, a rise-and-fall assembly, and a cable management assembly according to an embodiment of this application;
FIG. 9 is an exploded schematic diagram of a frame body, a rise-and-fall assembly, and a cable management assembly according to an embodiment of this application;
FIG. 10 is a schematic three-dimensional diagram of a structure of a slide block and a slide rail according to an embodiment of this application;
FIG. 11 is a schematic diagram of a plane structure of a slide block and a slide rail according to an embodiment of this application;
FIG. 12 is a schematic diagram of a structure of an assembled rotating shaft body, first fixing plate, and cable fixing base according to an embodiment of this application;
FIG. 13 is an exploded schematic diagram of a rotating shaft body, a first fixing plate, and a cable fixing base according to an embodiment of this application;
FIG. 14 is an exploded schematic diagram of a structure of a cable management assembly according to an embodiment of this application;
FIG. 15 is a schematic diagram of a structure of another angle of a cable management base according to an embodiment of this application;
FIG. 16 is a schematic diagram of changing sliding states of a cable management assembly and a first fixing plate that are on a slide rail according to an embodiment of this application;
FIG. 17 is a schematic diagram of a structure of another cable management assembly according to an embodiment of this application; and
FIG. 18 is an exploded schematic diagram of a structure of a base according to an embodiment of this application.

### Reference numerals:

100: display body; 11: housing; 111: frame; 112: back cover; 1121: first opening; 12: display module; 13: cable; 131: first cable; 132: second cable; 200: support; 21: front housing; 211: second opening; 22: rear housing; 221: rear housing body; 2211: fourth opening; 222: rear housing side wall; 2221: fifth opening; 23: frame body; 231: frame plate; 2311: third opening; 232: frame side wall; 300: rotating shaft assembly; 31: rotating shaft mounting plate; 32: rotating shaft housing; 321: shielding cover; 322: shielding casing; 3221: sixth opening; 33: rotating shaft body; 331: swing arm; 3311: first rotating shaft hole; 3312: limiting groove; 332: rotating shaft; 333: fixing element; 3331: second rotating shaft hole; 3332: fixing convex plate; 334: torsion spring; 400: base; 41: upper cover; 42: lower housing; 43: component; 500: rise-and-fall assembly; 51: slide block 52: slide rail; 52a: left slide rail; 52b: right slide rail; 521: outer slide rail; 522: inner slide rail; 523: steel ball; 53: first fixing plate; 531: fixing part; 533: threading hole; 54: slide rail connecting piece; 55: cable fixing base; 57: slide rail fixing plate; 600: cable management assembly; 61: second fixing plate; 62: cable management base; 63: cable management rollers; 64: cable management baffle; 700: main board; 701: board-to-board connector; 71: wireless board; 800: speaker; 900: IO sub-board; and 91, 92: interface.

### DESCRIPTION OF EMBODIMENTS

Embodiments of this application provide a display and a computer. The computer may be a desktop computer, and includes apparatuses such as a host, a display, a keyboard, and a mouse. Components such as a power supply, a hard drive, a disk, a memory, a main board, a central processing unit, a CD-ROM drive, an audio card, a network adapter, a graphics card, and a heat sink may be disposed in the host. The display mainly displays information such as text and image, and may also be used as a touch input device.

In a related technology, the display includes a display body and a support. The support is only used as a mechanical part to support the display body and adjust a support height and a pitch angle of the display body. The display body includes a display module, and components such as a main board and an interface that are disposed/provided at a back of the display module. In this case, a thickness size of the display body is restricted by components such as the main board and the interface, and therefore, the thickness size is large, resulting in a poor overall appearance effect of the display.

Based on the foregoing description, embodiments of this application provide a display and a computer. The display includes a display body and a support, a main board is disposed in the support, and only a display module is disposed in the display body, so that an ultra-thin design of the display body can be implemented. In addition, a pitch angle of the display body can be adjusted by setting a rotating shaft assembly, a lifting height of the display body can be adjusted by setting a rise-and-fall assembly, and a cable of the display module can be connected with the main board that is in the support by setting a cable management assembly. In addition, the cable can be lifted and lowered in an orderly manner in a lifting process of the display body.

The following describes the display provided in this application with reference to accompanying drawings and specific embodiments.

It should be noted that, In the accompanying drawings of embodiments of this application, an X axis may be defined as a thickness direction of the display body, in other words, a front-back direction when a user uses the display, a Y axis may be defined as a length direction of the display body, in other words, a left-right direction when the user uses the display, and a Z axis may be defined as a width direction of the display body, in other words, the height direction of the display, to be specific, the up and down direction when the user uses the display.

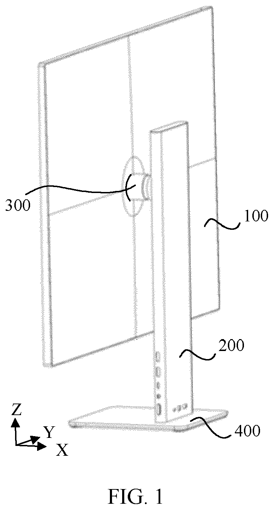

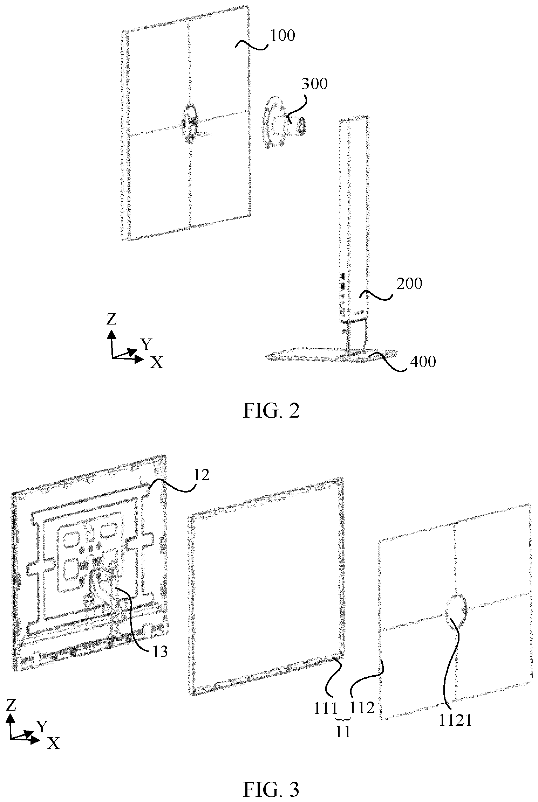

FIG. 1 is a schematic diagram of an overall structure of a display according to an embodiment of this application, and FIG. 2 is an exploded schematic diagram of a structure of a display of an electronic device according to an embodiment of this application. Refer to FIG. 1 and FIG. 2. Embodiments of this application provide a display. The display may include a display body 100 and a support 200. A display surface of the display body 100 is a front face facing a user, and the support 200 is disposed on a rear face that is of the display body 100 away from the display surface. The display body 100 is configured to display information such as a text or an image. The support 200 is a column structure. The support 200 is configured to support the display body 100, so that the display body 100 is supported on a tabletop or another workbench surface at a specific height, to facilitate the user to view the display body 100.

The display may further include a rotating shaft assembly 300. The rotating shaft assembly 300 is connected between the display body 100 and the support 200. The rotating shaft assembly 300 is configured to adjust an angle of the display body 100 relative to the support 200, so that the display body 100 has a pitch angle suitable for viewing by the user. The rotating shaft assembly 300 is connected to the top of the support 200, and may slide up and down relative to the support 200, to adjust a support height of the display body 100, so that the display body 100 has a height suitable for viewing by a user.

The display may further include a base 400, where the base 400 is connected to one end that is of the support 200 away from the display body 100, the base 400 may be a rectangular plate-shaped structure, and is configured to be placed on a tabletop or another workbench surface, and the support 200 is vertically disposed on the base 400. The base 400 and the support 200 are used together to implement stable support for the display body 100.

FIG. 3 is a schematic diagram of a structure of a display body according to an embodiment of this application. Refer to FIG. 3. A display body 100 may include a housing 11 and a display module 12. The display module 12 is disposed on the housing 11, and the housing 11 is configured to protect the display module 12. The housing 11 may include a frame 111 and a back cover 112. The frame 111 is disposed around the display module 12, and the back cover 112 is disposed on the frame 111 and is located on a side away from the display module 12. A rotating shaft assembly 300 and a support 200 are disposed on a side that is of the back cover 112 and that is away from the display module 12.

The display module 12 refers to an assembly that assembles a liquid crystal display component, a connecting piece, a control and driving peripheral circuit, a circuit board, a backlight source, a mechanical part, and the like. The display module 12 includes structures such as a display panel, a touch panel, a polarizer, and a backplane that are arranged in a stacked manner. The display panel may be a liquid crystal display module (Liquid Crystal Display, LCD), or may be an organic light emitting diode (Organic light emitting diode, OLED). The backplane is a main mechanical part of the display module 12 and can be a metal plate such as stainless steel and has high structural strength.

A cable 13 is disposed on the display module 12. The cable 13 may be a type of cable such as a coaxial cable or an FFC flat cable (Flexible Flat Cable, flexible flat cable), and may include an EDP signal cable, a cable that is connected to the touch panel, and the like. The cable 13 is led out from the display module 12, and is connected to a main board of a display to implement power supply and data transmission. A quantity of cables 13 is not specifically limited. From a perspective of convenient connection and cable management, there may be one or two cables 13.

The backplane of the display module 12 may be fixedly connected to the back cover 112 in a manner such as magnetic suction, and the backplane of the display module 12 may be fixedly connected to the frame 111 in a manner such as magnetic suction, screw fixing, and the like. A first opening 1121 is disposed in a middle part of the back cover 112. The first opening 1121 may facilitate fastening connection between the rotating shaft assembly 300 and the backplane of the display module 12, and may enable the cable 13 to extend out, and the cable 13 may pass through the rotating shaft assembly 300 to connect to the main board in the support 200.

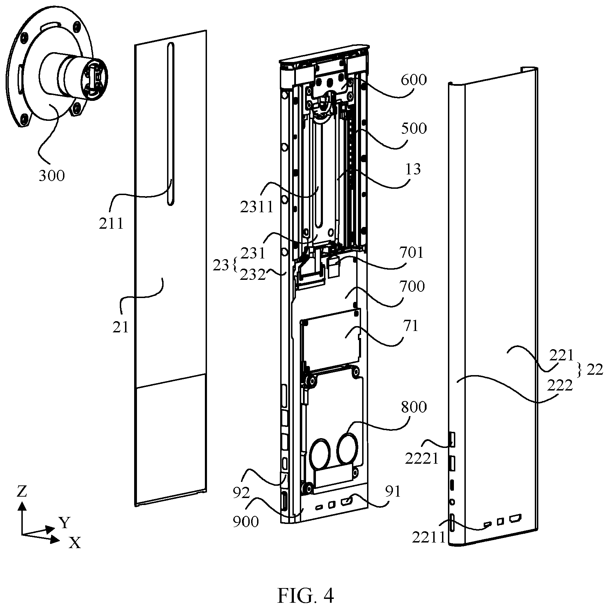

FIG. 4 is an exploded schematic diagram of a structure of a rotating shaft assembly and a support according to an embodiment of this application. Refer to FIG. 4. A support 200 includes a front housing 21, a rear housing 22, and a frame body 23 located between the front housing 21 and the rear housing 22, where the front housing 21 is disposed facing the display body 100, and the rear housing 22 is disposed away from the display body 100. The front housing 21, the rear housing 22, and the frame body 23 are enclosed to form an accommodation space of the support 200, and apparatuses such as a rise-and-fall assembly 500, a cable management assembly 600, a main board 700, a speaker 800, and an IO sub-board 900 are disposed in the accommodation space.

The rise-and-fall assembly 500 is connected to the rotating shaft assembly 300, and is configured to implement a sliding lifting function of the display body 100. The cable 13 that passes through the rotating shaft assembly 300 and enters the support 200 is connected to the cable management assembly 600, and the cable management assembly 600 is configured to ensure orderly lifting of the cable 13 in a lifting process of the display body 100. The rise-and-fall assembly 500 and the rotating shaft assembly 300 are disposed in the upper part of the support 200. The main board 700 is disposed under the rise-and-fall assembly 500 and the cable management assembly 600. After passing through the cable management assembly 600, the cable 13 may be fastened to the main board 700 by using the board-to-board connector 701, to implement reliable connection and enable connection between the display module 12 and the main board 700.

An apparatus such as a processor, a memory, a power supply, and a heat dissipation component may be disposed on the main board 700. Because large space is required, in embodiments of this application, the main board 700 is disposed in the support 200, and this facilitates lightness and thinness of the display body 100 and facilitates proper utilization of internal space of the support 200. In addition, this helps increase an area of the main board 700, enhance performance of the main board 700, improve heat dissipation efficiency of the main board 700, and the like. A wireless board 71 is further disposed in the support 200. Components such as a radio frequency chip and an antenna are disposed on the wireless board 71 to improve diversity of a display function. The main board 700 and the wireless board 71 may be arranged in a laminated manner, to improve compactness of layout.

The speaker 800 may be disposed below the main board 700. A sound emitting direction of the speaker 800 is a direction facing the front housing 21, and a plurality of sound emitting holes (not shown in the figure) may be disposed on the front cover 21. The speaker 800 may be disposed close to the base 400, so that in a lifting process of the display body 100, a sound hole is not shielded, and a sound-emitting effect of the speaker 800 is not affected.

In the related technologies, a desktop computer lacks robust space inside a display body for disposing a speaker, and the speaker is generally disposed in a host. It is not difficult to understand that because the host is far away from a display, and the host is generally disposed in a space such as a bottom of a desk, a sounding effect of the speaker is poor. In addition, convenience is poor when a headset and a microphone are connected to the host. However, in an embodiment of this application, a speaker 800 is disposed in the support 200, and a distance between the speaker 800 and the display body 100 is close, so that a sounding effect is better, and a headset and a microphone are more convenient to be connected.

A second opening 211 is disposed on the front cover 21, and the frame body 23 may include a frame plate 231 and a frame side wall 232. A third opening 2311 is disposed on the frame plate 231. The second opening 211 and the third opening 2311 are correspondingly disposed and are both strip-shaped holes. An extension direction of a strip-shaped hole is from top to bottom, so that the rotating shaft assembly 300 and the rise-and-fall assembly 500 are connected and move up and down in the strip-shaped hole.

The support 200 is further disposed with an IO sub-board 900. The IO sub-board 900 is configured to provide various input/output IO interfaces, such as a VGA interface, a DVI interface, and an HDMI interface. An external connection cable is connected to the display through these interfaces, so that the display is connected to the host and the power supply. An interface 91 is provided toward the rear housing 22, and an interface 92 is provided on the frame side wall 232 of the frame body 23. Correspondingly, the rear housing 22 includes a rear housing body 221 and a rear housing side wall 222, and a fourth opening 2211 corresponding to the interface 91 is provided on the rear housing main body 221. A fifth opening 2221 corresponding to the interface 92 is provided on the rear housing side wall 222.

In the related technologies, an interface of a display is provided on the display body. This is not conducive to light and thin design of the display body, and is difficult to avoid exposure of a plurality of external connection cables connected to an interface to a sight of a user, thereby affecting visual simplicity and aesthetics. In an embodiment of this application, both the main board 700 and the IO sub-board 900 are disposed in the support 200, and the interface is arranged at a lower part of the support 200 and is provided close to a rear of the support 200. This facilitates arrangement of a plurality of connection cables of the display, and can improve simplicity of a desktop.

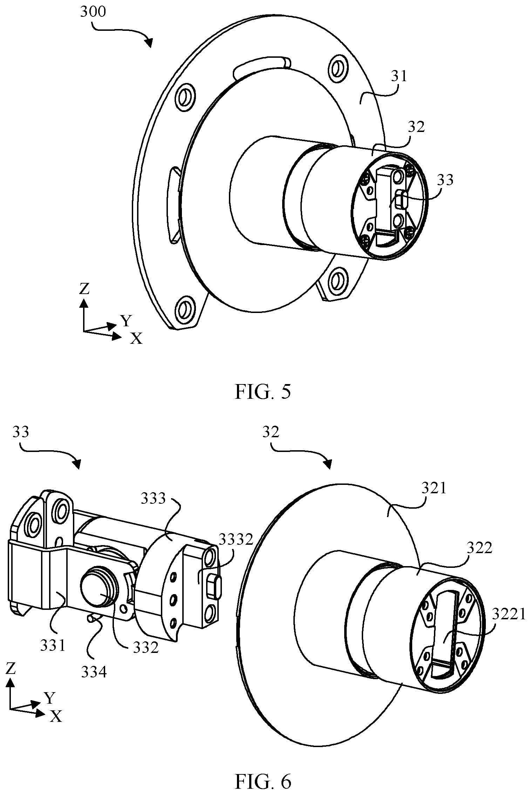

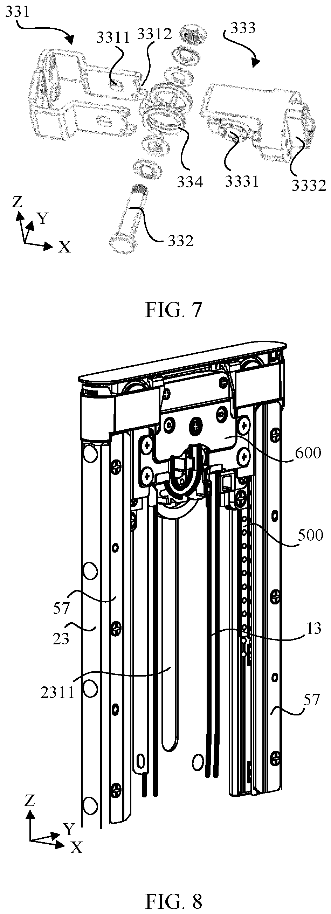

FIG. 5 is a schematic diagram of an overall structure of a rotating shaft assembly according to an embodiment of this application. FIG. 6 is an exploded schematic diagram of a structure of a rotating shaft assembly according to an embodiment of this application. FIG. 7 is an exploded schematic diagram of a structure of a rotating shaft body according to an embodiment of this application. As shown in FIG. 5 to FIG. 7, a rotating shaft assembly 300 includes a rotating shaft mounting plate 31, a rotating shaft housing 32, and a rotating shaft body 33. The rotating shaft mounting plate 31 is configured to be fixedly connected to a display body 100, and the rotating shaft body 33 is configured to be fixedly connected to a rise-and-fall assembly 500 that is in a support 200. The rotating shaft housing 32 is disposed on and cover the outer side of the rotating shaft body 33 to improve appearance aesthetics.

Specifically, the rotating shaft mounting plate 31 may be fixedly connected to a backplane of a display module 12 through a structure such as a threaded fastener. The rotating shaft mounting plate 31 is located on a side that is of a back cover 112 and that faces the display module 12, to be specific, is located on a side that is of a first opening 1121 and that faces inside of a display body 100.

The rotating shaft housing 32 may include a shielding cover 321 and a shielding casing 322. The shielding cover 321 is in a plate shape, for example, a circular plate consistent with a shape of the first opening 1121, and the shielding cover 321 may be fixedly connected to the rotating shaft mounting plate 31 in a manner such as clamping or screwing. The shielding cover 321 is configured to cover an outer side of the first opening 1121, to shield the first opening 1121, thereby preventing the rotating shaft mounting plate 31 and the display module 12 from being exposed to the outer side from the first opening 1121, thereby improving safety and aesthetics. The shielding casing 322 has a cylindrical shape, and is used to cover an outer side of the rotating shaft body 33 to protect the rotating shaft body 33 and enhance aesthetics of the rotating shaft main body 33. The shielding cover 321 and the shielding casing 322 may be integrally molded by a process such as injection molding, or may be fixedly connected by clamping, screwing, bonding, or the like.

The rotating shaft body 33 is a main component of the rotating shaft assembly 300, and is configured to implement a rotating function to adjust a pitch angle of the display body 100. The rotating shaft body 33 mainly includes a swing arm 331, a rotating shaft 332, a fixing element 333, and a torsion spring 334, where the swing arm 331 and the fixing element 333 are respectively used to fix the display body 100 and the support 200, and the swing arm 331 and the fixing element 333 are connected through the rotating shaft 332, so that the swing arm 331 can rotate with respect to the fixing element 333 by using the rotating shaft 332 as an axis.

Specifically, the extension direction of the rotating shaft 332 is parallel to a plane on which the display body 100 is located and perpendicular to an extension direction of a slide rail 52, in other words, a length direction of the display body 100 is represented by a Y direction in the figure, so that when the swing arm 331 rotates by using the rotating shaft 332 as the axis, the display body 100 can be driven to adjust the pitch angle. A first rotating shaft hole 3311 is provided on the swing arm 331, a second rotating shaft hole 3331 is provided on the fixing element 333, and the rotating shaft 332 penetrates the first rotating shaft hole 3311 and the second rotating shaft hole 3331, and is locked and fixed by using components such as a nut and a washer.

One end that is of the swing arm 331 away from the first rotating shaft hole 3311 may be fixedly connected to the display body 100. For example, the end may be locked and attached to the backplane of the display module 12 through a screw. There may be two swing arms 331, the two swing arms 331 are disposed oppositely, and one end that is of the fixing element 333 and that has the second rotating shaft hole 3331 is sandwiched between the two swing arms 331. A fixing convex plate 3332 is disposed at the other end that is of the fixing element 333 away from the second rotating shaft hole 3331, a sixth opening 3221 is provided on one end surface that is of the shielding casing 322 of the rotating shaft housing 32 away from the shielding cover 321, and the fixing convex plate 3332 protrudes from the sixth opening 3221. The fixing convex plate 3332 is configured to be fixedly connected to the rise-and-fall assembly 500.

A limiting groove 3312 is further provided on the swing arm 331, and a limiting stopper (not shown in the figure) is correspondingly disposed on the fixing element 333. When the swing arm 331 is connected to the fixing element 333 through a rotating shaft 332, the limiting stopper is located in the limiting groove 3312. In a rotation process of the swing arm 331, the limiting groove 3312 may limit a moving range of the limiting stopper, so that a rotation angle of the swing arm 331 may be limited, so that the pitch angle of the display body 100 falls within a preset range. The torsion spring 334 is disposed on and sleeves the rotating shaft 332 for pre-pressing to counteract gravity torque from the display body 100, and can improve rotation feeling.

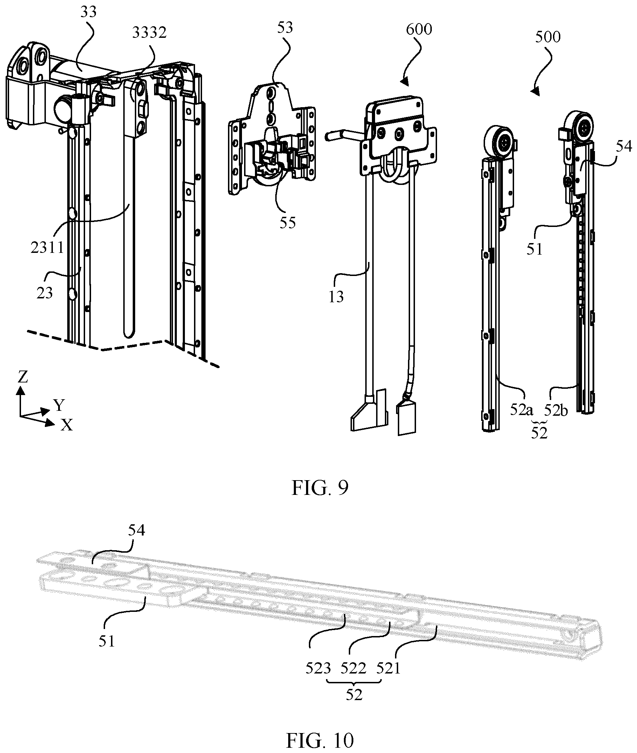

FIG. 8 is a schematic diagram of a structure of a frame body, a rise-and-fall assembly, and a cable management assembly according to an embodiment of this application. FIG. 9 is an exploded schematic diagram of a frame body, a rise-and-fall assembly, and a cable management assembly according to an embodiment of this application. Refer to FIG. 8 and GIG. 9. A rise-and-fall assembly 500 may include a slide block 51, a slide rail 52, a first fixing plate 53, a slide rail connecting piece 54, a cable fixing base 55, and a slide rail fixing plate 57.

The slide rail 52 may extend in a height direction of a display and is fixedly connected to a frame body 23 by the slide rail fixing plate 57. The slide block 51 and the slide rail connecting piece 54 are connected in the slide rail 52 and can slide on the slide rail 52. The first fixing plate 53 is separately fixedly connected to the slide block 51 and the rotating shaft assembly 300, so that the rotating shaft assembly 300 can drive the display body 100 to implement a lifting function as the slide block 51 slides. The cable fixing base 55 is fixedly connected to the first fixing plate 53, and is configured to fix a cable 13. After the cable 13 is fixed by the cable fixing base 55, the cable management assembly 600 arranges the cable. The cable management assembly 600 is fixedly connected to the slide rail connecting piece 54, and the slide rail connecting piece 54 drives the cable management assembly 600 to slide relative to the slide rail 52.

Optionally, the slide rail 52 includes a left slide rail 52a and a right slide rail 52b, the left slide rail 52a and the right slide rail 52b are symmetrically disposed, and two ends of the first fixing plate 53 are respectively connected to the left slide rail 52a and the right slide rail 52b through the slide block 51. Two ends of the cable management assembly 600 are respectively connected to the left slide rail 52a and the right slide rail 52b through the slide rail connecting piece 54, so that connection between the first fixing plate 53 and the cable management assembly 600 and the slide rail 52 is more reliable, and a sliding process is more stable.

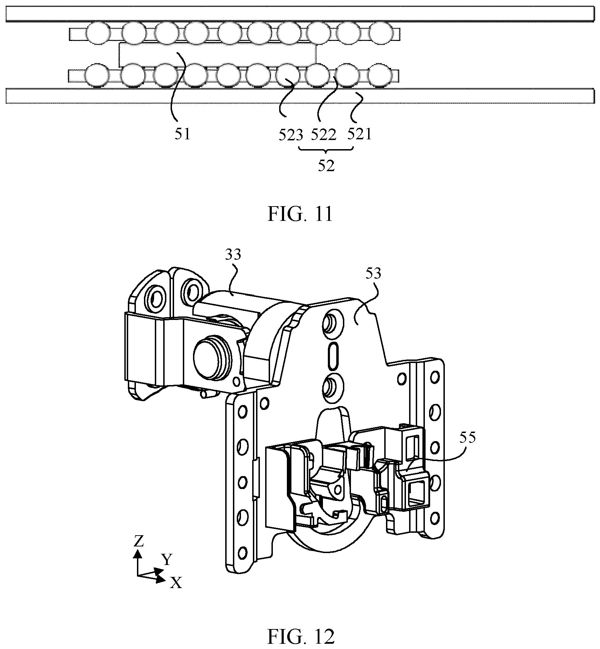

FIG. 10 is a schematic diagram of a three-dimensional structure of a slide block and a slide rail according to an embodiment of this application. FIG. 11 is a schematic diagram of a plane structure of a slide block and a slide rail according to an embodiment of this application. Refer to FIG. 11 and FIG. 12. A slide rail 52 includes an outer slide rail 521, an inner slide rail 522, and a steel ball 523, where a slide block 51 is located in the inner slide rail 522, and an inner slide rail 522 is located in the outer slide rail 521, the steel ball 523 is embedded in the inner slide rail 522, and is in contact with the slide block 51 and the outer slide rail 521 at the same time.

Under a rolling action of the steel ball 523, the slide block 51 and the inner slide rail 522 relatively move, the inner slide rail 522 and the outer slide rail 521 relatively move, and therefore, after two relative motion conversions, the speed of the slide block 51 relative to the outer slide rail 521 is twice that of the inner slide rail 522 relative to the outer slide rail 521. A first fixing plate 53 is fastened to the slide block 51 and drives the rotating shaft assembly 300 to move synchronously with the slide block 51. A slide rail connecting piece 54 is fixedly connected to the inner slide rail 522 and drives the cable management assembly 600 to move synchronously with the inner slide rail 522. In this way, a movement speed of the rotating shaft assembly 300 is twice that of the movement speed of the cable management assembly 600, to implement the cable management with differential speed for the movement of the cable management assembly 600 and the rotating shaft assembly 300.

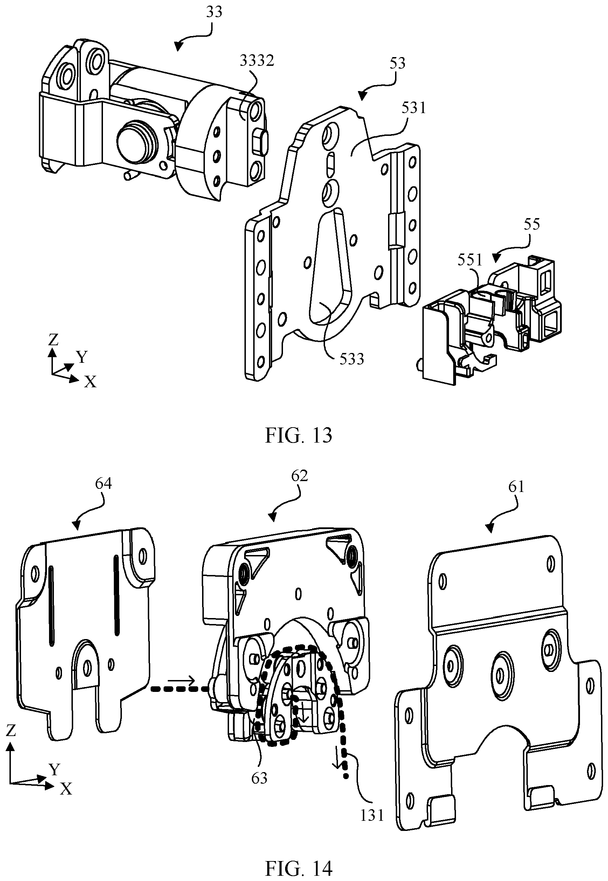

FIG. 12 is a schematic diagram of a structure of an assembled rotating shaft body, first fixing plate, and cable fixing base according to an embodiment of this application. FIG. 13 is an exploded schematic diagram of a rotating shaft body, a first fixing plate, and a cable fixing base according to an embodiment of this application. Refer to FIG. 12 and FIG. 13. A rotating shaft body 33 is fixedly connected to a first fixing plate 53. Specifically, a frame body 23 is provided with a third opening 2311 corresponding to a second opening 211 on a front cover 21, and a fixing convex plate 3332 extends into the second opening 211 and the third opening 2311, and is fastened to a fixing part 531 of the first fixing plate 53 by screwing or the like.

The first fixing plate 53 is further provided with a threading hole 533 configured for a cable 13 to pass through, a cable fixing base 55 is fastened to a side that is of the first fixing plate 53 and that is away from the rotating shaft body 33, and the cable 13 is fastened to the cable fixing base 55 after passing through the threading hole 533. A specific structure of the cable fixing base 55 includes a plurality of wire clips 551 and this can implement reliable fixing of the cable 13.

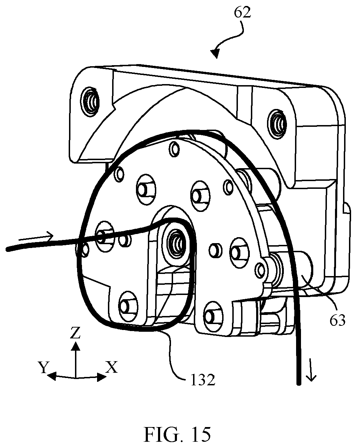

In a possible implementation, there are two cables 13. In this case, a cable management assembly 600 is set to be such that the two cables do not interfere with each other. FIG. 14 is an exploded schematic diagram of a structure of a cable management assembly according to an embodiment of this application, and FIG. 15 is a schematic diagram of a structure of another angle of a cable management base according to an embodiment of this application. Refer to FIG. 14 and FIG. 15. A cable management assembly 600 may include a second fixing plate 61, a cable management base 62, cable management rollers 63, and a cable management baffle 64.

The second fixing plate 61 may be fixedly connected to an inner slide rail 522 through a slide rail connecting piece 54, and the second fixing plate 61 moves synchronously with the inner slide rail 522, in other words, slides relative to an outer slide rail 521. The cable management base 62 is fastened to the second fixing plate 61, and is located on a side that is of the second fixing plate 61 and that faces the first fixing plate 53. A first cable 131 and a second cable 132 are routed out of a cable threading hole 533 of the first fixing plate 53 and are respectively wound around two groups of cable management rollers 63 that are fastened to a front side and a rear side of the cable management base 62. Axial directions of the cable management rollers 63 are perpendicular to an extension direction of a slide rail 52, so that cables 13 disposed around a peripheral side of the cable management rollers 63 can be moved along the extension direction of the slide rail 52, in other words, positions of the cables are changed as a display body 100 is raised or lowered. The cable management baffle 64 is located on a side that is of the cable management base 62 and that faces the first fixing plate 53, and the second fixing plate 61 and the cable management baffle 64 are respectively used to prevent the first cable 131 and the second cable 132 from being detached from the cable management rollers 63.

The first cable 131 is located between the cable management base 62 and the second fixing plate 61. A cabling direction thereof is shown by an arrow in FIG. 14. The first cable 131 passes through the first fixing plate 53, is fixed by a cable fixing base 55, passes through the cable management baffle 64 and the cable management base 62, and are respectively wound around the cable management rollers 63. The cable management rollers 63 are on the cable management base 62 and face the second fixing plate 61, where a plurality of cable management rollers 63 are included, and the plurality of cable management rollers 63 are arranged in an arc shape or a semicircular shape to bind the cabling of the first cable 131, to ensure that a moving part of the cable 131 meets a minimum radius requirement of the first cable 131. Rolling actions of the cable management rollers 63 can facilitate cable movement and reduce pulling and friction of the second cable 132, so that the first cable 131 move more smoothly relative to the cable management base 62.

The second cable 132 is located between the cable management base 62 and the cable management baffle 64, and a cabling direction is shown by an arrow in FIG. 15. The second cable 132 passes through the rotating shaft fixing plate 53, is fixed by the cable fixing base 55, passes through the cable management baffle 64, and are respectively wound around the cable management rollers 63. The cable management rollers 63 are on a side that is of the cable management base 62 and that faces the cable management baffle 64, where a plurality of cable management rollers 63 are included, and the plurality of cable management rollers 63 are arranged in an arc shape or a semicircular shape to bind the cabling of the second cable 132, to ensure that a moving part of the second cable 132 meets a minimum radius requirement of the second cable 132. Rolling actions of the cable management rollers 63 can facilitate cable movement and reduce pulling and friction of the second cable 132, so that the second cable 132 can move more smoothly relative to the cable management base 62.

The first cable 131 and the second cable 132 are respectively fastened to two sides of the front side and the rear side of the cable management base 62, and the first cable 131 and the second cable 132 are wound in opposite directions, and are arranged at intervals in a length direction of the display body 100 without interfering with each other. Therefore, orderly lifting of the first cable 131 and the second cable 132 can be ensured. It is not difficult to understand that two ends of the cables 13 are respectively fastened to the cable fixing base 55 and a main board 700, and the remaining lengths are wound around the cable management base 62. In a lifting process of the cable management base 62, lengths of the first cable 131 and the second cable 132 remain unchanged. Only positions thereof wound on the cable management rollers 63 change, so that the cables 13 do not have a risk of pulling, winding, or jamming, and the like, and reliability of the cables 13 and reliability of fixing the cables 13 to the main board 700 are not affected.

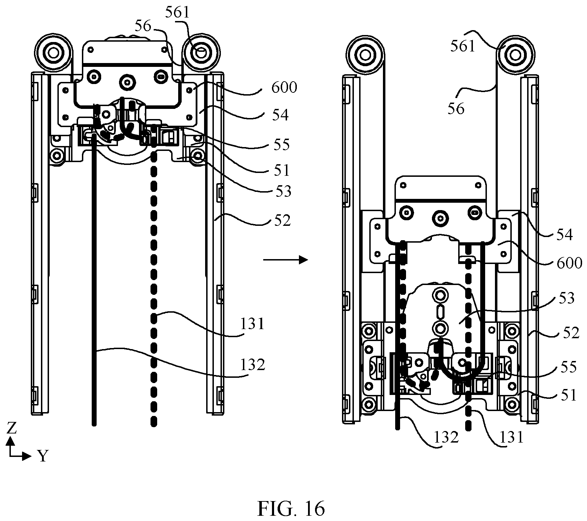

FIG. 16 is a schematic diagram of changing sliding states of a cable management assembly and a first fixing plate on a slide rail according to an embodiment of this application. As shown in FIG. 16, a rise-and-fall assembly 500 further includes a constant force spring 56, one end of the constant force spring 56 is fastened to a slide block 51, and the other end is fastened to a frame plate 231 of a frame body 23 by a constant force spring seat 561. The constant force spring 56 is configured to provide a constant elastic force to ensure that the slide block 51 is subjected to a uniform force during sliding process thereof, thereby improving the stability of lifting a display body 100.

Refer to the shape changes of a first cable 131 and a second cable 132 and positions changes of a cable management assembly 600 and a first fixing plate 53 in FIG. 16. It can be seen that the movement speed of the first fixing plate 53 is twice the movement speed of the cable management assembly 600. Therefore, in a lifting process of the first fixing plate 53 and the cable management assembly 600, cables 13 on the cable management assembly 600 always has a margin, and a case such as clamping and vigorous pulling disappears. Therefore, reliability of fastening the cables 13 to the main board 700 can be ensured, and orderly lifting of the cables 13 can be implemented.

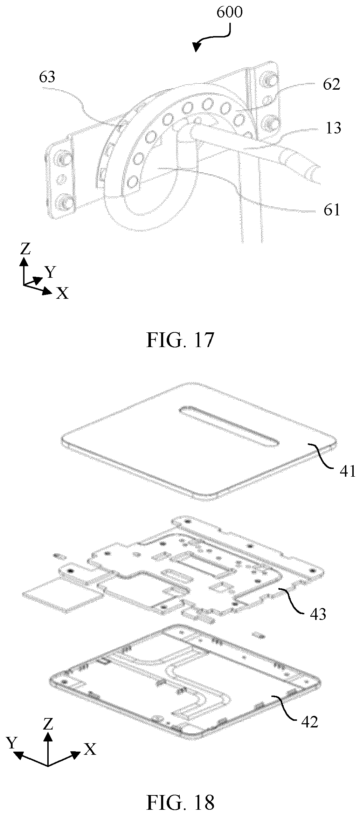

In another possible implementation, there is one cable 13. FIG. 17 is a schematic diagram of a structure of another cable management assembly according to an embodiment of this application. Refer to FIG. 17. A cable management assembly 600 may include a second fixing plate 61, a cable management base 62, and cable management rollers 63. The second fixing plate 61 is disposed in an outer slide rail 521, and can slide in the outer slide rail 521, and the cable management base 62 is fastened to the second fixing plate 61, and is located on a side that is of the second fixing plate 61 and that faces a first fixing plate 53. Axial directions of the cable management rollers 63 are perpendicular to an extension direction of a slide rail 52, and a cable 13 passing through a cable threading hole 533 of the first fixing plate 53 is wound around a peripheral side of the cable management rollers 63 that are on the cable management base 62. The plurality of cable management rollers 63 are arranged in an arc or semicircular shape, and under a rolling action of the cable management rollers 63, the movement of the cable 13 relative to the cable management base 62 is smoother. It is not difficult to understand that when there is one cable 13, a structure of the cable management assembly 600 is simpler, and the second fixing plate 61 simultaneously slides relative to the outer slide rail 521, and prevents the cable 13 from coming out of the cable management rollers 63.

FIG. 18 is an exploded schematic diagram of a structure of a base according to an embodiment of this application. As shown in FIG. 18, a base 400 includes an upper cover 41 and a lower housing 42, where the upper cover 41 and the lower housing 42 are fixedly connected in a manner of clamping, screwing, or the like, the upper cover 41 and the lower housing 42 form an accommodating space, and a component 43 is disposed in the accommodating space. The component 43 may include a near field communication NFC antenna, a wireless charging coil, and the like, to make full use of space of the base 400, and add practical functions such as near field communication and wireless charging to a display.

According to the display and the computer provided in embodiments of this application, the main board is placed in the support, so that a thickness of the display body is no longer restricted by the main board, and the ultra-thin setting of the display body can be implemented. A cable of a display module in the display body is connected to the main board in the support, and a cable management assembly and a rise-and-fall assembly are disposed, so that reliable connection of the cable can be implemented, and the cable can be lifted and lowered in an orderly manner in a lifting process of the display body.

In embodiments of this application, it should be noted that: Unless otherwise explicitly specified and limited, the terms "installation", "connection", and "connection" shall be understood in a broad sense, for example, may be fixed connections, may be indirect connections through intermediate media, may be internal communication between two elements or interaction between two elements. A person of ordinary skill in the art may understand specific meanings of the foregoing terms in embodiments of this application based on a specific situation. The terms "first", "second", "third", and the like in the specification, claims, and accompanying drawings in embodiments of this application are used to distinguish between similar objects, but do not need to be used to describe a specific order or sequence.

Moreover, the terms "include", "have" and any other variants mean to cover the non-exclusive inclusion, for example, a process, method, system, product, or device that includes a list of steps or units is not necessarily limited to those steps or units, but may include other steps or units not expressly listed or inherent to such a process, method, product, or device.

Finally, it should be noted that: The foregoing embodiments are merely used to describe the technical solutions of embodiments of this application, but not to limit the technical solutions. Although embodiments of this application are described in detail with reference to the foregoing embodiments, a person of ordinary skill in the art should understand that: The technical solution described in the foregoing embodiments may still be modified, or some or all of the technical features thereof may be equivalently replaced. However, these modifications or replacements do not cause the essence of the corresponding technical solutions to depart from the scope of the technical solutions in the embodiments of this application.

## Claims

1. A display, comprising: a main board, a display body, and a support configured to support the display body; wherein
the display body comprises a housing and a display module mounted on the housing, the support is disposed on a side that is of the housing and that is away from the display module, the main board is mounted in the support, and a cable of the display module extends out of the housing and into the support to be connected to the main board.

2. The display according to claim 1, wherein the display further comprises a rise-and-fall assembly and a cable management assembly, the rise-and-fall assembly is located above the main board, the rise-and-fall assembly comprises a slide block and a slide rail, the slide block is fixedly connected to the display body, the slide rail is fixedly connected to the support, one end that is of the cable and that extends into the support is fixedly connected to the slide block, the other end of the cable passes through the cable management assembly and is fastened to the main board, the slide block and the cable management assembly are slidingly connected to the slide rail separately, and a sliding speed of the cable management assembly relative to the slide rail is less than a sliding speed of the slide block relative to the slide rail.

3. The display according to claim 2, wherein the slide rail comprises an outer slide rail, an inner slide rail, and a steel ball, the slide block is disposed in the inner slide rail, the inner slide rail is disposed in the outer slide rail, the cable management assembly is fastened to the inner slide rail, and the steel ball is embedded on the inner slide rail and is rollingly connected to the slide block and the outer slide rail, so that a sliding speed of the inner slide rail relative to the outer slide rail is half of a sliding speed of the slide block relative to the slide rail.

4. The display according to claim 2, wherein the rise-and-fall assembly further comprises a first fixing plate and a cable fixing base, wherein the first fixing plate is disposed between the display body and the cable management assembly, the first fixing plate is fixedly connected to the slide block and is fixedly connected to the display body, the cable fixing base is disposed on a side that is of the first fixing plate and that faces the cable management assembly, and the cable is clamped and fastened to the cable fixing base.

5. The display according to claim 4, wherein the rise-and-fall assembly further comprises a constant force spring, the constant force spring is fastened to the support by using a constant force spring seat, and an end of the constant force spring is fastened to the slide block.

6. The display according to claim 3, wherein the cable management assembly comprises a cable management base and a cable management roller, the cable management base is fixedly connected to the inner slide rail, the cable management roller is fastened to the cable management base, an axial direction of the cable management roller is perpendicular to an extension direction of the slide rail, and the cable is wound around a peripheral side of the cable management roller.

7. The display according to claim 6, wherein a plurality of cable management rollers are comprised, and the plurality of cable management rollers are arranged in an arc shape or a semicircular shape on a surface of the cable management base.

8. The display according to claim 6, wherein the cable management assembly further comprises a second fixing plate, the second fixing plate is fixedly connected to the inner slide rail, the cable management base is fastened to the second fixing plate, and the cable management roller is disposed on a side that is of the cable management base and that faces the second fixing plate.

9. The display according to claim 8, wherein the cable management assembly further comprises a cable management baffle, wherein the cable management baffle is fastened to the cable management base, the cable management baffle is located on a side that is of the cable management base and that is away from the second fixing plate, and the cable management roller is disposed on a side that is of the cable management base and that faces the cable management baffle.

10. The display according to claim 9, wherein the cable comprises a first cable and a second cable, and the first cable and the second cable are respectively wound around the cable management rollers located on two sides of the cable management base.

11. The display according to any one of claims 2 to 10, wherein the display further comprises a rotating shaft assembly, the display body is connected to the slide block by using the rotating shaft assembly, an axis of the rotating shaft assembly is parallel to a plane on which the display body is located and perpendicular to the extension direction of the slide rail, the display body can rotate relative to the slide block, and the cable passes through the rotating shaft assembly and extends into the support.

12. The display according to claim 11, wherein the rotating shaft assembly comprises a rotating shaft body, the rotating shaft body comprises a swing arm, a rotating shaft, and a fixing element, the swing arm is fixedly connected to the display body, the fixing element is fixedly connected to the slide block, and the swing arm is rotatably connected to the fixing element by using the rotating shaft.

13. The display according to claim 12, wherein the rotating shaft assembly further comprises a rotating shaft mounting plate and a rotating shaft housing, the rotating shaft housing comprises a shielding cover and a shielding casing, a first opening is provided on the housing, the rotating shaft mounting plate is fixedly connected to a backplane of the display module, the shielding cover and the rotating shaft mounting plate are fixedly connected and cover outside the first opening, the shielding casing covers outside the rotating shaft body and is fixedly connected to the shielding cover, and the cable of the display module extends from the first opening and passes through the shielding cover and the shielding casing.

14. The display according to any one of claims 2 to 13, wherein the support comprises a front housing, a rear housing, and a frame body located between the front housing and the rear housing, the slide rail is fastened to the frame body, a second opening is provided on the front housing, an extension direction of the second opening is consistent with the extension direction of the slide rail, and the cable extends into the support through the second opening.

15. The display according to any one of claims 1 to 14, wherein a speaker is further disposed in the support, the speaker is connected to the main board, the speaker is located below the main board, and a sound-emitting hole of the speaker faces a front face that is of the support and that faces the display body.

16. The display according to any one of claims 1 to 15, wherein an IO sub-board is disposed in the support, an IO interface connected to the IO sub-board is provided on the support, the IO interface is located on a back surface that is of the support and that is away from the display body and/or a side surface of the support, and the IO interface is provided close to a bottom of the support.

17. The display according to any one of claims 1 to 16, wherein the display further comprises a base, the base is disposed at the bottom of the support for support, and a near field communication NFC chip and/or a wireless charging coil are/is disposed in the base.

18. A computer, comprising a host and the display according to any one of claims 1 to 17.
